# EUROPÄISCHE PATENTANMELDUNG

(11) **EP 1 972 521 A2**
(43) Veröffentlichungstag der Anmeldung: **24.09.2008**
(21) Anmeldenummer: 08002679.2
(22) Anmeldetag: 13.02.2008
(51) Int. Cl.: B62B 3/06

(54) **Transportwagen**

(30) Priorität: 22.03.2007 DE 102007013798
(71) Anmelder: Maschinenbau, Reparatur und Reinigung R.G. Volkman, 86676 Ehekirchen (DE)
(72) Erfinder: Volkmann, Rainer, 86633 Neuburg (DE)
(74) Vertreter: Wunderlich, Rainer

(57) **Zusammenfassung**

Die Erfindung betrifft einen Transportwagen zum Aufnehmen eines Innenwagens. Eine besonders robuste und einfach zu beladende Anordnung wird dadurch erreicht, dass ein Fahrgestell vorgesehen ist, welches in einem Seitenbereich offen ist, wobei mindestens ein Aufnahmebereich gebildet ist. Über den offenen Seitenbereich ist ein Innenwagen mit Rädern in den Aufnahmebereich einschiebbar. Weiter ist eine Hubeinrichtung vorgesehen, mit welcher der Innenwagen zumindest teilweise von der Bodenoberfläche abhebbar ist.

## Beschreibung

Die Erfindung betrifft einen Transportwagen zum Aufnehmen eines Innenwagens gemäß dem Oberbegriff des Anspruchs 1.

Ein gattungsgemäßer Transportwagen geht beispielsweise aus der DE 34 01 107 C1 hervor. Zum Aufschieben eines Innenwagens in den Transportwagen ist eine Rampe vorgesehen. Das Be- und Entladen des Transportwagens kann somit nur an bestimmten Orten durchgeführt werden, an welchen eine Rampe vorgesehen ist.

Aus der DE 87 12 913.2 U1 geht ein Transportwagen hervor, bei dem eine Rampe klappbar am Transportwagen selbst angeordnet ist. Zum Aufschieben eines Innenwagens ist das Rampengestell herunterklappbar.

Weiter ist aus der US 4,077,535 ein flach ausgebildeter Transportwagen bekannt, welcher unter einen Transportwagen schiebbar ist. Über eine Hubeinrichtung kann der Trägerwagen angehoben und mit dem Transportwagen weiterbefördert werden.

Der Erfindung liegt die **Aufgabe** zugrunde, einen Transportwagen anzugeben, welcher bei einem einfachen und robusten Aufbau einen Innenwagen effizient aufnehmen und befördern kann.

Die Aufgabe wird nach der Erfindung durch einen Transportwagen mit den Merkmalen des Anspruchs 1 gelöst. Bevorzugte Ausführungsformen der Erfindung sind in den abhängigen Ansprüchen angegeben.

Der erfindungsgemäße Transportwagen ist dadurch gekennzeichnet, dass ein Fahrgestell vorgesehen ist, welches in einem Seitenbereich offen ist, wobei mindestens ein Aufnahmebereich gebildet ist, dass über den offenen Seitenbereich der Innenwagen mit Rädern in den Aufnahmebereich einschiebbar ist und dass eine Hubeinrichtung vorgesehen ist, mit welcher der Innenwagen zumindest teilweise von der Bodenoberfläche abhebbar ist.

Der erfindungsgemäße Transportwagen kann so einfach mit dem Innenwagen be- und entladen werden. Der Innenwagen wird einfach in einen offenen Seitenbereich des Transportwagens eingeschoben. Da der Transportwagen somit die Außenabmessungen vorgibt und lediglich einen offenen Seitenbereich aufweist, kann ein Be- und Entladen auch dann erfolgen, wenn eine Vielzahl von Transportwägen zu einem Zug miteinander verkuppelt ist.

Das zumindest teilweise Anheben des Innenwagens durch die erfindungsgemäße Hubeinrichtung sorgt für eine zuverlässige Verbindung und Halterung des Innenwagens im Fahrgestell und stellt eine gute Führung des Innenwagens beim Verfahren mit dem Transportwagen sicher. Vorzugsweise wird durch die Hubeinrichtung ein Innenwagen derart angehoben, dass lediglich die Räder einer Achse Kontakt zum Boden behalten. Dies erlaubt eine sichere Führung und vermeidet Spurprobleme, insbesondere bei Kurvenfahrten.

Ein sicheres Halten des Innenwagens im Transportwagen wird erfindungsgemäß dadurch erreicht, dass eine Verschlusseinrichtung zum Verschließen des offenen Seitenbereiches angeordnet ist. Die Verschlusseinrichtung kann beliebig ausgebildet sein, beispielsweise als ein starres Element oder als eine Kette, Band, etc.

Eine besonders bevorzugte Ausgestaltung der Verschlusseinrichtung besteht nach der Erfindung darin, dass die Verschlusseinrichtung einen Bügel aufweist, der an einer Seite des Fahrgestells schwenkbar zwischen einer Freigabestellung und einer Verschlussstellung angelenkt ist. Der Bügel weist dabei mindestens die Länge des offenen Seitenbereiches auf. In der Freigabestellung ist der Bügel etwa vertikal gerichtet, während in der Verschlussstellung der Bügel eine etwa horizontale Position einnimmt. Am Bügel kann insbesondere ein Handgriff angeordnet sein, so dass dieser in einfacher Weise von Hand betätigt werden kann. Der Bügel dient somit als eine Art Schranke, der den offenen Seitenbereich schließt, so dass der Innenwagen vollständig von dem rahmenartigen Fahrgestell und dem Bügel umschlossen ist.

Gemäß der Erfindung ist es dabei besonders zweckmäßig, dass die Hubeinrichtung mit der Verschlusseinrichtung gekoppelt ist, wobei der eingeschobene Innenwagen beim Verschließen anhebbar ist. Das Verschließen bzw. das Öffnen der Verschlusseinrichtung kann dabei gleichzeitig genutzt werden, die Hubeinrichtung in der gewünschten Weise zu betätigen. Hierdurch ist eine hohe Betriebssicherheit erreichbar. Denn, wenn beispielsweise der Bügel verschlossen ist, befindet sich der Innenwagen automatisch in der zumindest teilweise angehobenen Position, so dass dann ein zuverlässiges und sicheres Verfahren von Transportwagen und Innenwagen möglich ist.

Weiter ist es nach der Erfindung besonders bevorzugt, dass die Hubeinrichtung einen Hebelmechanismus mit einem Hubelement aufweist, wobei beim Verschwenken des Bügels in die Verschlussstellung das Hubelement zum Anheben des Innenwagens nach oben bewegbar ist. Der Hebelmechanismus ist vorzugsweise im Front- oder Heckbereich des Fahrgestelles angeordnet und kann beispielsweise in seinem Wirkungsprinzip etwa dem eines Wagenhebers entsprechen. Der Bügel mit seiner relativ großen Länge dient dabei als Betätigungshebel, so dass der Hebelmechanismus mit einer Übersetzung auch bei Innenwägen mit hohem Gewicht einfach von Hand betätigt werden kann. Grundsätzlich kann der Innenwagen auch insgesamt angehoben werden, so dass kein Kontakt der Räder des Innenwagens zum Boden besteht.

Die Betriebssicherheit wird erfindungsgemäß noch dadurch verbessert, dass eine Verriegelungseinrichtung angeordnet ist, mit welcher der Bügel in der Verschlussstellung verriegelbar ist. Dies kann beispielsweise ein einfacher Riegel oder Sperrbolzen sein. Hierdurch wird verhindert, dass sich der Bügel unabsichtlich löst und in die Freigabestellung zurückschwenkt.

Wie beschrieben, kann die Hubeinrichtung von Hand über einen Hebelmechanismus oder ein hydraulisches System betätigt werden. Für ein besonders leichtes Betätigen bei bestimmten Anwendungsfällen ist es nach der Erfindung zweckmäßig, dass ein Antrieb zum Betätigen der Hubeinrichtung vorgesehen ist. Dies kann insbesondere ein Elektromotor sein, welcher etwa über Batterie betrieben ist. Weiter sind jedoch auch pneumatische oder hydraulische Druckantriebe, insbesondere Stellzylinder, sowie federgespannte Antriebe möglich.

Weiter ist es nach der Erfindung vorgesehen, dass die Hubeinrichtung eine Wippe aufweist, welche im Aufnahmebereich angeordnet ist. Die Wippe ist dabei um eine horizontale Achse kippbar zwischen einer Aufnahmeposition und einer Transportposition. In der Aufnahmeposition, welche die Wippe im unbelasteten Zustand einnehmen kann, kann ein Innenwagen auf die zum Boden geneigte Wippe aufgeschoben werden. Aufgrund des Gewichtes des Innenwagens kippt die Wippe mit dem Innenwagen in die Transportposition. Hierbei ist der Innenwagen teilweise oder vollständig vom Boden abgehoben. Bei dieser Anordnung wird somit die Hubbewegung zum Anheben des Innenwagens durch das Gewicht des Innenwagens selbst ausgelöst und bewirkt.

Bei dem erfindungsgemäßen Transportwagen wird der Innenwagen in einem Seitenbereich und somit grundsätzlich quer zur Fahrtrichtung des Transportwagens eingeschoben. Sofern der Innenwagen nur teilweise angehoben wird und mit zumindest einer Achse den Bodenkontakt behält, ist es vorteilhaft, dass die Räder des Innenwagens Ihre Ausrichtung ändern können. Dies wird erfindungsgemäß dadurch erreicht, dass ein Innenwagen vorgesehen ist, dessen Räder um vertikale Drehachsen verschwenkbar sind. Dies erlaubt ein einfaches Einschieben des Innenwagens quer zur Fahrtrichtung des Transportwagens und anschließend ein Verfahren in Längsrichtung, wobei sich die Räder des Innenwagens dann um 90° verschwenken.

Weiter ist es nach der Erfindung vorteilhaft, dass am Fahrgestell mindestens eine Kupplung zum Kuppeln angeordnet ist. Die Kupplung ist insbesondere im Front- und/oder Heckbereich des Transportwagens angeordnet. Somit kann ein Transportwagen an eine Zugmaschine oder zusammen mit mehreren Transportwagen zu einem Zug verbunden werden. Gerade bei der Anordnung von Zügen ist die erfindungsgemäße Anordnung besonders vorteilhaft, da ein einfaches Be- und Entladen des Innenwagens über den offenen Seitenbereich möglich ist, ohne dass ein Entkoppeln des Transportwagens notwendig wäre.

Die Erfindung wird weiter anhand von bevorzugten Ausführungsbeispielen erläutert, welche stark schematisiert in den beigefügten Zeichnungen dargestellt sind. In den Zeichnungen zeigen:
- Fig. 1: eine perspektivische Ansicht eines ersten erfindungsgemäßen Transportwagens beim Einschieben eines Innenwagens;
- Fig. 2: den Transportwagen von Fig. 1 mit eingeschobenem und teilweise angehobenem Innenwagen; und
- Fig.: eine perspektivische Ansicht einer zweiten Ausführungsform eines erfindungsgemäßen Transportwagens mit Wippe.

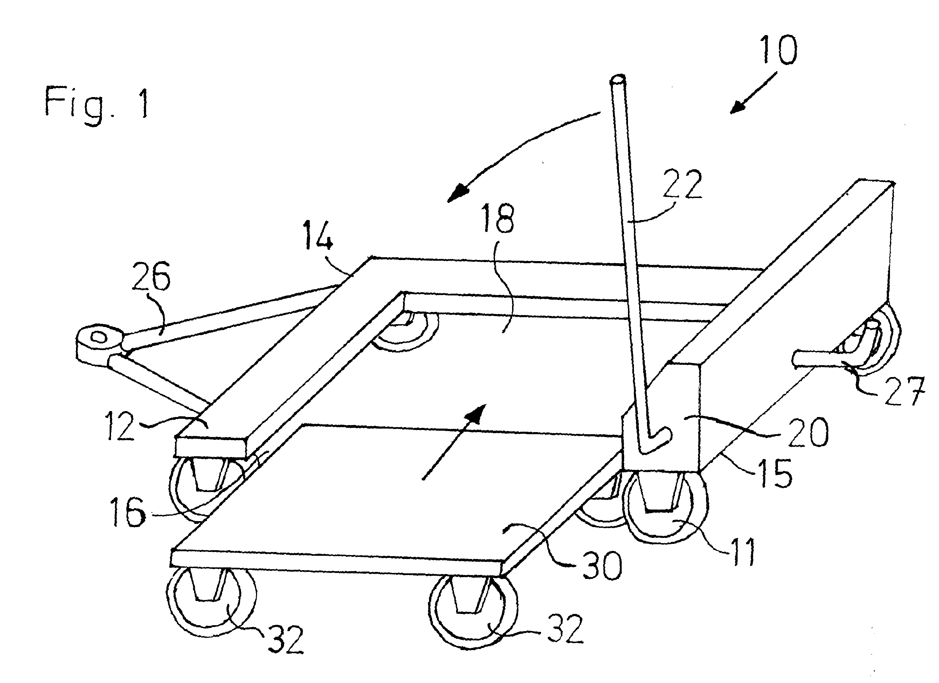

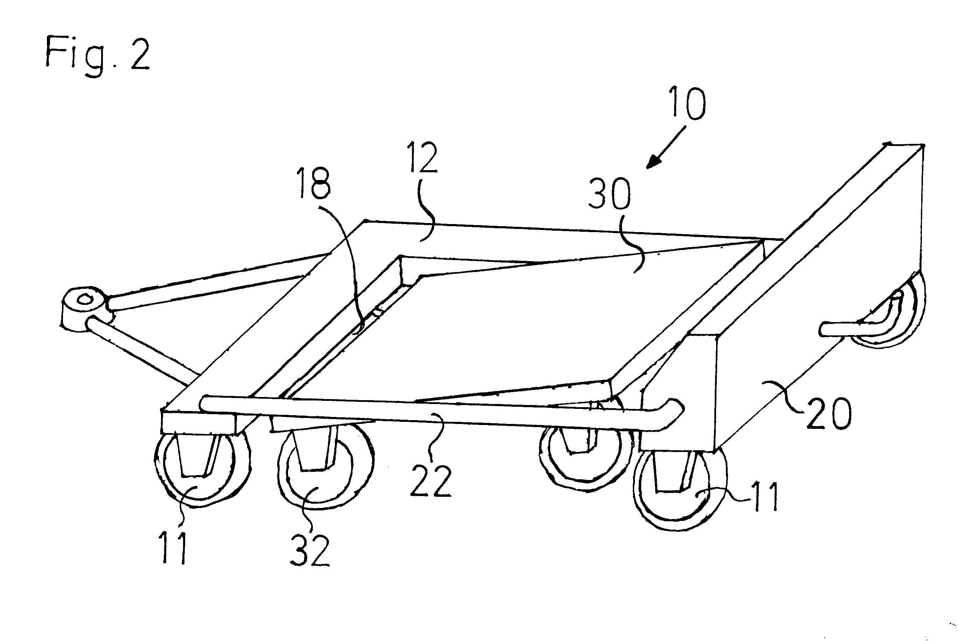

Ein erster erfindungsgemäßer Transportwagen 10 wird im Zusammenhang mit den Figuren 1 und 2 erläutert. Der Transportwagen 10 weist ein etwa U-förmiges Fahrgestell 12 mit einem mittigen Aufnahmebereich 18 auf, welcher über einen Seitenbereich 16 offen ist. An der Unterseite des Fahrgestells 12 sind vier Räder 11 zum Verfahren des Transportwagens 10 angeordnet. In einem in Längs- oder Fahrtrichtung gesehenen Frontbereich des Fahrgestells 12 ist eine Kupplungsdeichsel 26 angeordnet, während in einem Heckbereich ein Kupplungshaken 27 angebracht ist. Diese dienen als Kupplung zum Ankoppeln an eine Zugmaschine oder an andere Transportwagen 10.

Ein Innenwagen 30 mit vier Rädern 32 kann quer zur Fahrtrichtung mit den Rädern 32 in den Aufnahmebereich 18 eingeschoben werden. Der Aufnahmebereich 18 ist größer als der Innenwagen 30 ausgebildet, so dass dieser zuverlässig aufgenommen werden kann. Als Verschlusseinrichtung ist ein stangenförmiger Bügel 22 vorgesehen, welcher sich gemäß Fig. 1 in der etwa vertikalen Freigabestellung befindet, in welcher der Seitenbereich 16 offen ist.

Nach Einschieben des Innenwagens 30 kann der Bügel 22 zum Verschließen des Fahrgestells 12 nach unten in die etwa horizontal gerichtete Verschlussstellung geschwenkt werden, wie es in Fig. 2 dargestellt ist. Bei dem dargestellten Transportwagen 10 ist der Bügel 22 mit einer Hubeinrichtung 20 gekoppelt, welche in einem kastenförmigen Gehäuse am Heckbereich des Transportwagens 10 angeordnet ist. Über ein oder mehrere Hubelemente, welche von dem kastenförmigen Gehäuse der Hubeinrichtung 20 sich in den Aufnahmeraum 18 erstrecken, wird der eingeschobene Innenwagen 30 bei Verschwenken des Bügels 22 nach unten durch diese platten- oder hakenförmigen Hubelemente angehoben, gehalten und teilweise vom Boden abgehoben. Gemäß Fig. 2 wird hierbei die Achse im Heckbereich des Innenwagens 30 angehoben, während die vorderen Räder 32 im Frontbereich weiter in Kontakt mit dem Boden bleiben. Bei dieser Anordnung wird also weiter ein Teil des Gewichtes des Innenwagens 30 und einer eventuell darauf angeordneten Last weiter von den Rädern 32 der Vorderachse des Innenwagens 30 und zum anderen Teil durch die Räder 11 des Fahrgestells 12 getragen.

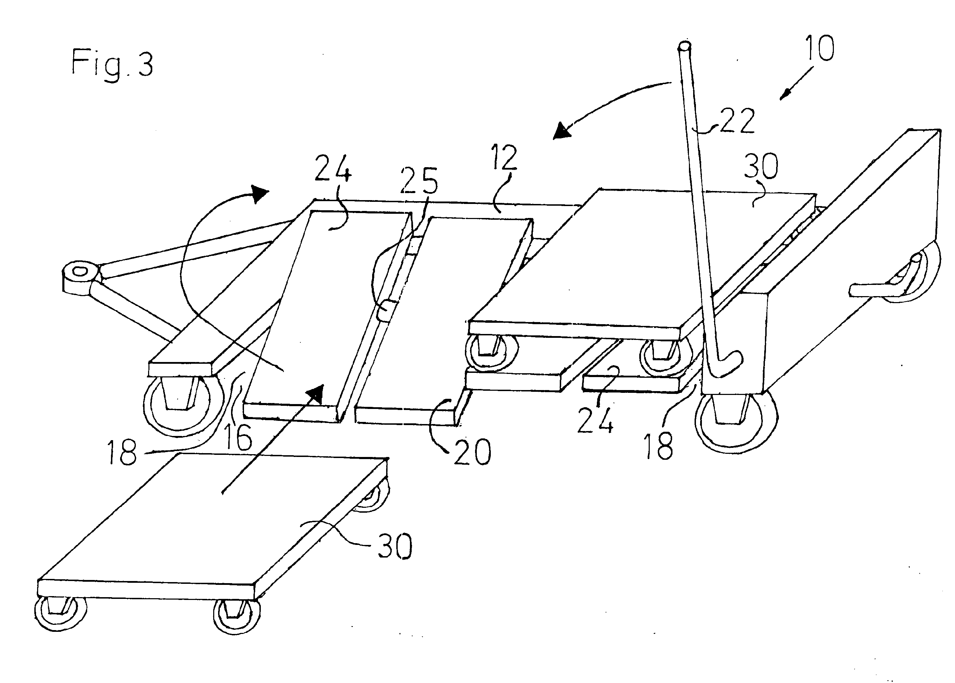

Eine weitere Ausführungsform eines erfindungsgemäßen Transportwagens 10 ist in Fig. 3 dargestellt. Das rahmenartige Fahrgestell 12 weist zwei Aufnahmebereiche 18 für jeweils einen Innenwagen 30 auf. Im Unterschied zu der vorbeschriebenen Ausführungsform umfasst die Hubeinrichtung 20 eine plattenförmige Wippe 24, welche über eine horizontale Drehachse 25 zwischen einer Aufnahmeposition und einer Transportposition verschwenkbar ist. Die Drehachse 15 ist am Frontbereich und am Heckbereich des U-förmigen Fahrgestelles 12 befestigt.

In Fig. 3 ist die Aufnahmeposition der Wippe 24 im linksseitigen Bereich dargestellt. Über den offenen Seitenbereich 16 kann ein Innenwagen 30 quer zur Fahrtrichtung gemäß dem angedeuteten Pfeil auf die Wippe 24 aufgeschoben werden. Beim Aufschieben kippt die Wippe 24 um die Drehachse 25 von der Aufnahmeposition in die Transportposition, welche auf der rechten Seite gemäß Fig. 3 dargestellt ist. In diesem Zustand kann nunmehr der Bügel 22 der Verschlusseinrichtung nach unten in die horizontale Verschlussposition geschwenkt werden, wobei der Bügel 22 bei dieser Ausführungsform ausschließlich eine Verschlussfunktion besitzt.

## Patentansprüche

1. Transportwagen zum Aufnehmen eines Innenwagens (30),
**dadurch gekennzeichnet,**
- **dass** ein Fahrgestell (12) vorgesehen ist, welches in einem Seitenbereich (16) offen ist, wobei mindestens ein Aufnahmebereich (18) gebildet ist,
- **dass** über den offenen Seitenbereich (16) der Innenwagen (30) mit Rädern (32) in den Aufnahmebereich (18) einschiebbar ist und
- **dass** eine Hubeinrichtung (20) vorgesehen ist, mit welcher der Innenwagen (30) zumindest teilweise von der Bodenoberfläche abhebbar ist.

2. Transportwagen nach Anspruch 1,
**dadurch gekennzeichnet,**
**dass** eine Verschlusseinrichtung zum Verschließen des offenen Seitenbereiches (16) angeordnet ist.

3. Transportwagen nach Anspruch 2,
**dadurch gekennzeichnet,**
**dass** die Verschlusseinrichtung einen Bügel (22) aufweist, der an einer Seite des Fahrgestells (12) schwenkbar zwischen einer Freigabestellung und einer Verschlussstellung angelenkt ist.

4. Transportwagen nach Anspruch 2 oder 3,
**dadurch gekennzeichnet,**
**dass** die Hubeinrichtung (20) mit der Verschlusseinrichtung gekoppelt ist, wobei der eingeschobene Innenwagen (30) beim Verschließen anhebbar ist.

5. Transportwagen nach Anspruch 3 oder 4,
**dadurch gekennzeichnet,**
**dass** die Hubeinrichtung (20) einen Hebemechanismus mit einem Hubelement aufweist, wobei bei einem Verschwenken des Bügels (22) in die Verschlussstellung das Hubelement zum Anheben des Innenwagens (30) nach oben bewegbar ist.

6. Transportwagen nach einem der Ansprüche 3 bis 5,
**dadurch gekennzeichnet,**
**dass** eine Verriegelungseinrichtung angeordnet ist, mit welcher der Bügel (22) in der Verschlussstellung verriegelbar ist.

7. Transportwagen nach einem der Ansprüche 1 bis 6,
**dadurch gekennzeichnet,**
**dass** ein Antrieb zum Betätigen der Hubeinrichtung (20) vorgesehen ist.

8. Transportwagen nach einem der Ansprüche 1 bis 7,
**dadurch gekennzeichnet,**
**dass** die Hubeinrichtung (20) mindestens eine Wippe (24) aufweist, welche im Aufnahmebereich (18) angeordnet ist.

9. Transportwagen nach einem der Ansprüche 1 bis 8,
**dadurch gekennzeichnet,**
**dass** ein Innenwagen (30) mit Rädern (32) vorgesehen ist, welche um vertikale Drehachsen verschwenkbar sind.

10. Transportwagen nach einem der Ansprüche 1 bis 9,
**dadurch gekennzeichnet,**
**dass** an dem Fahrgestell (12) mindestens eine Kupplung zum Ankuppeln angeordnet ist.
